(19) Europäisches Patentamt

European Patent Office

Office européen des brevets

(11) **EP 0 684 679 B1**

(12) **EUROPEAN PATENT SPECIFICATION**

(45) Date of publication and mention
of the grant of the patent:
**29.07.1998 Bulletin 1998/31**

(51) Int Cl.6: **H02J 3/01**, H03H 7/01,
H02M 5/18

(21) Application number: **95401168.0**

(22) Date of filing: **19.05.1995**

(54) **Method for reducing waveform distortion in an electrical utility system and circuit for an electrical utility system**

Methode zur Reduzierung der Verzerrung der Wellenform in einer elektrischen Einrichtung und Schaltung für eine elektrische Einrichtung

Méthode pour la réduction de la distorsion de la forme de l'onde en un dispositif électrique et circuit pour un dispositif électrique

(84) Designated Contracting States:
**AT BE CH DE DK ES FR GB GR IE IT LI NL PT SE**

(30) Priority: **26.05.1994 FI 942447**

(43) Date of publication of application:
**29.11.1995 Bulletin 1995/48**

(73) Proprietor: **ABB Control OY**
**65101 Vaasa (FI)**

(72) Inventors:
• **Fälldin, Agne**
**S-85461 Sundsvall (SE)**

• **Kiiskinen, Esko**
**SF-65380 Vaasa 38 (FI)**

(74) Representative: **Orès, Bernard et al**
**Cabinet ORES**
**6, Avenue de Messine**
**75008 Paris (FR)**

(56) References cited:
**EP-A- 0 187 312**          **DE-A- 4 219 214**

## Description

The invention relates to a method for reducing waveform distortion according to the preamble of claim 1.

The invention also concerns a circuit for use in an electrical utility system.

Nonlinear loads which do not have a sinewave input current waveform but which rather steal a current pulse with steep leading and trailing edges, generating harmonic distortion on the voltage waveform of an electrical system. Such consumers are, e.g., miniature fluorescent lamps equipped with an electronic ballast: these lamps consume a current pulse of only 1.5 ms duration at the top of the 50 Hz voltage halfwave. Moreover, in a modern office environment the electrical system may be comprehensively loaded by problematic consumers of equally low quality including computers, copiers, printers and air-conditioning equipment with electronic speed control. The dominating overtone component, namely the third harmonic, caused by such loads is summed almost arithmetically on the neutral conductor of the electrical system. In practice, almost two-fold currents have been measured on the neutral conductor with respect to the current of the phase legs. Conventionally, the neutral conductor has no overload protection, and with the steady increase of electric energy consumption, a hazard situation is imminent. Furthermore, the third harmonic of the mains frequency has been identified as a source of interference with computer equipment and communications facilities.

It is an object of the present invention to overcome the shortcomings of the above-described technology and to achieve an entirely novel method of electrical interference reduction method for electrical utility networks and a filtering circuit for use in an electrical utility network.

The invention is based on placing a bandstop filter between the star point of the main transformer and the connection points of the loads, whereby the center frequency of the filter is tuned at the third harmonic of the mains frequency.

More specifically, the method according to the invention is characterized by what is stated in the characterizing part of claim 1.

Furthermore, the circuit according to the invention is characterized by what is stated in the characterizing part of claim 5.

The invention offers significant benefits.

The method according to the invention is capable of preventing neutral conductor overloading, and furthermore, magnetic fields caused by currents in the neutral conductor can be essentially reduced. Additionally, interference with communications and computer equipment is reduced. Also power losses caused by the third harmonic component can be effectively reduced. By virtue of using a saturable magnetic steel circuit, the impedance of the filter can be made extremely low for short-circuit currents.

In the following, the invention will be examined in more detail by means of exemplifying embodiments with reference to the attached drawings, in which:

Figure 1 is a basic diagram of an electrical circuit according to the invention;

Figure 2 is the circuit diagram of a filter embodiment employed in the method according to the invention;

Figure 3 is a side view of an inductor structure suited for implementing the inductance of Fig. 2; and

Figure 4 is a graph illustrating the impedance vs. frequency characteristic of a filter configuration corresponding to that shown in Fig. 2.

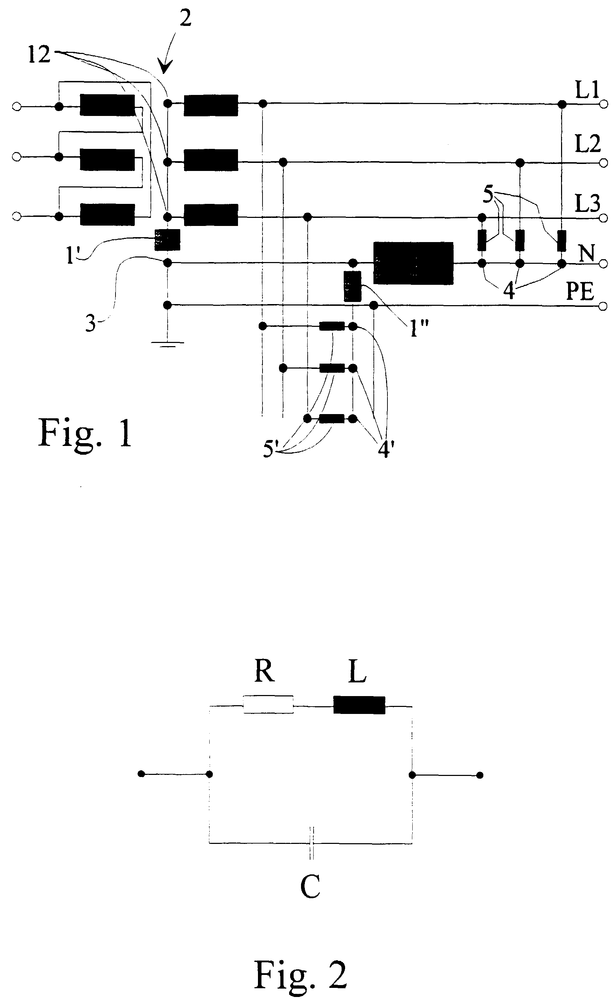

With reference to Fig. 1, an electrical utility system TN-S comprises a main transformer 2 with a star point 12, phase leg conductors L1, L2 and L3, a neutral conductor N and a protective earth conductor PE. Electric energy is transferred in an electrical system using alternating current at a frequency $f_0$ which typically is 50 Hz in Europe and 60 Hz on the North American continent. Loads 5 and 5' are connected between the phase leg conductors L1 - L3 and the neutral conductor N. The loads 5 and 5' are connected to the neutral conductor N at connection points 4 and 4'. The neutral conductor N is further connected to the actual earth potential at an earthing point 3. According to the invention, a bandstop filter 1, 1' or 1'' tuned to filter away the third harmonic of the mains frequency ($3*f_0$) is connected to the neutral conductor N between the connection point 4 (or 4') of the load 5 (or 5') and the actual earth potential 3, or between transformer star point 12 and neutral conductor N.

With reference to Fig. 2, the filter is typically formed by a series-parallel connected circuit tuned to the third harmonic of the mains frequency comprising series-connected inductance L and resistance R in parallel with capacitance C. As mentioned above, the filter resonant frequency is $3*f_0$, which is 150 Hz in Europe and 180 Hz in the USA, respectively. If the resistance R is small, the resonant frequency of the filter is approximately determined by the equation

$$1-\omega^2 LC=0,$$

where in a 50 Hz network $\omega = 2\pi*150$ 1/s. According to the invention, the inductor can have either an air-core, magnetic-steel core or ferrite core structure. The air gap of a magnetic-steel or ferrite core is dimensioned so as to avoid saturation of the core material at a neutral conductor current of twice the nominal phase leg current. The inductance L is advantageously formed by a number of small, parallel-connected, magnetic steel core inductors. Here, the total current-carrying cross section of the conductors of the parallel-connected inductors must be at least equal to the cross section of the neutral conductor. The impedance Z of the filter is

$$Z = \frac{R \cdot (1 - \omega^2 LC \cdot k) + j\omega L(1 + \frac{T}{T_L})}{1 - \omega^2 LC + \frac{R - \omega^2 LCR_s}{R_F} + j\omega T(1 + k + \frac{a}{T} + \frac{R_S}{R_F})}$$

in which

$$k = \frac{R_S}{R}, \quad a = \frac{L}{R_F}, \quad T = RC, \quad T_L = \frac{L}{R_S},$$

$R_F$ represents iron core losses

The eddy current losses of the inductor core increase proportional to the square of the magnetic flux frequency. To keep the Q-value of the inductor sufficiently high, the core must be made either from a ferrite material or laminated from special-grade, low-loss "electrical" sheet steel.

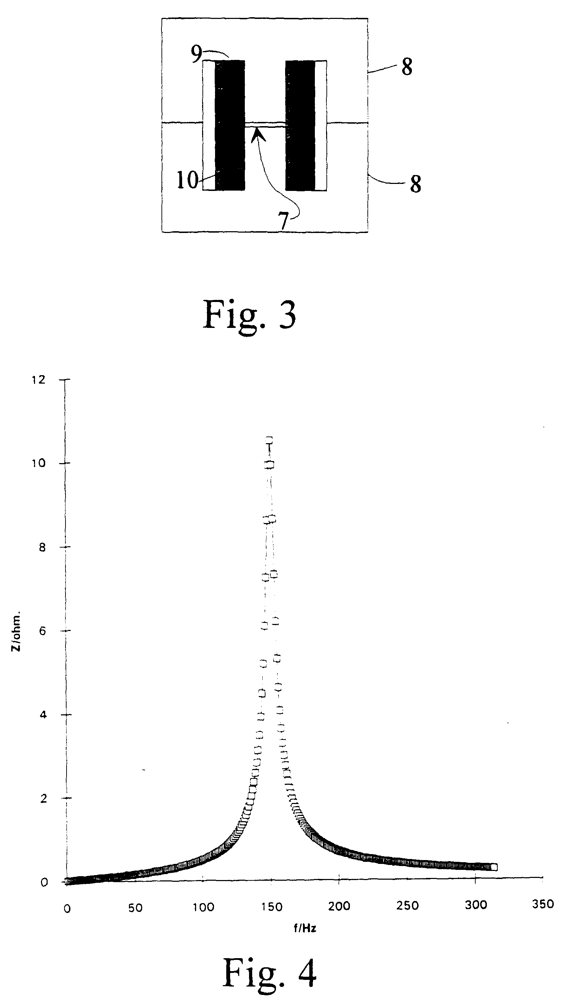

With reference to Fig. 3, a typical embodiment of the inductor L for the circuit of Fig. 2 is shown. The cross section of the neutral conductor is assumed to be 35 mm$^2$ for $I_n = 125$ A. The capacitance of the capacitor C is selected as 2.64 mF. Then, the filter circuit can be tuned to resonance at 150 Hz using an inductor L with an inductance of 0.426 mH. In practice, the width $l_0$ of the air gap 7 and the cross section $A_{Fe}$ of the magnetic circuit center leg 10 determine the first approximation of the inductance of one inductor of the filter according to the equation

$$L \simeq \mu_0 N^2 \frac{A_{Fe}}{l_0}$$

where N is the number of turns in the inductor winding and $\mu_0$ is the permeability of vacuum (1.256 μH/m).

In this case the air gap $l_0$ has a value of 7.6 mm when the number of turns N is 116 and the cross section of the inductor center leg 10 is 10.9 cm$^2$.

In the inductor assembly, the E-shaped magnetic steel core laminations 8 are trimmed such that the center legs are shorter by half the air gap, that is, $l_0/2 = 3.8$ mm. Hence, when two identical laminated stacks 8 are juxtaposed, the total air gap 7 will be 7.6 mm as desired.

A winding of 116 turns is wound about the center leg 10 using copper wire of dia. 3.0 mm. To make the total cross section of the winding conductors more than 35 mm$^2$, i.e. more than the cross section of the neutral conductor, e.g., ten inductor windings can be connected in parallel. The winding form 9 is compressed between the laminated core halves 8 during the assembly of the inductor.

With reference to Fig. 4, the filter impedance reaches its maximum value of 10 ohm at the 150 Hz center frequency and the filter impedance falls below 0.15 ohm at 50 Hz.

Next, the magnetic circuit must be checked not to saturate at the current level of 250 A in the neutral conductor N of a 50 Hz electrical system. Then, the current through each winding of a single inductor is I = 1/10 * 250 A = 25 A.

The peak value of the magnetic flux and the magnetic induction is computed

$$LI = N\Phi = N \cdot \frac{\hat{b}}{\sqrt{2}} \cdot A_{Fe}$$

$$\hat{b} = \frac{4.26 \cdot 25 \cdot \sqrt{2} \cdot 10^{-3} \, Vs}{116 \cdot 10.34 \cdot 10^{-4} \, m^2} = 1.26 \, T$$

If the magnetic core of the inductor of filter 1 is driven to saturation, harmonics will be generated in the electrical system.

In the following the saturation of the magnetic circuit is checked with computer loads, which can exeed 40 V at the third harmonic (e.g. 150 Hz).

$$U = N\omega \frac{\hat{b}}{\sqrt{2}} A_{Fe}$$

$$\hat{b}(150 \, Hz) = \frac{40\sqrt{2} \, V}{116 \cdot 300\pi \frac{1}{s} \cdot 10.34 \cdot 10^{-4} \, m^2} = 0.50 \, T$$

The arithmetic sum of the the 50 Hz (or 60 Hz) iduction and 150 Hz (or 180 Hz) induction has an effect on the saturation of the magnetic core.

However, the saturation of the magnetic core at short-circuit current levels has the benefit that the reactance of the filter is reduced to a fraction of its normal value approaching that of an air-core inductor. Then, the fuse protection of the system is quickly tripped in the short-circuit situation, whereby harmonics generated on the neutral conductor N during a period of less than a second cause no harm in the system.

A 50 Hz unbalanced current flowing through the third harmonic filter in accordance with the invention causes a movement of the zero point of phase voltages. The filter should be dimensioned such that this movement of the zero point is less than 8 % of the phase voltage. In other words the inductance of the filter should be dimensioned at 50 Hz below a certain value. This rule can be presented as an equation:

$$L_{max} = \frac{0.08 \cdot \frac{8}{9} U_n}{\sqrt{3} \cdot 100\pi \cdot I_N}$$

Further, the third harmonic filter in accordance with the invention should be dimensioned such that the product of the current in the neutral conductor and the impedance of the filter at 150 Hz are at least equal to the total interference voltage at 150 Hz.

## Claims

1. An interference suppression method for an electrical system, including the steps of providing an electrical system comprising a main transformer (2) with a star point (12), phase leg conductors (L1, L2, L3) connected to the transformer (2) and a neutral conductor (N) which at its one end (3) is connected to the earth potential (3) and the star point (12) of the transformer (2) and at its other end (4) to loads (5), in which electrical system electric energy is transferred at a frequency f, said method being **characterized** by providing

   - a bandstop filter (1) tuned at a center frequency 3*f connected between the star point (12) of the transformer (2) and the connection points (4) of the loads (5).

2. A method as defined in claim 1, **characterized** in that the bandstop filter (1) tuned at a center frequency 3*f is connected between the earth potential connection point (3) of the neutral conductor (N) and the connection points (4) of the loads (5).

3. A method as defined in claim 1 or 2, **characterized** in that the bandstop filter (1) is formed by a parallel-resonant circuit.

4. A method as defined in claim 3, **characterized** in that the inductance (L) of said parallel-resonant circuit is formed by an inductor with a magnetic steel or ferrite core whose air gap is dimensioned so as to avoid saturation of the inductor magnetic circuit (8) at a neutral conductor a 50 Hz current of twice the nominal phase leg current when at the same time there is a third harmonic voltage (40 V) over the filter.

5. A circuit for an electrical system, said electrical system which transfers electrical energy at a frequency f comprising

   - a main transformer (2) with a star point (12),

   - phase leg conductors (L1, L2, L3) connected to the transformer (2),

   - a neutral conductor (N) connected to the earth potential (3) and to the star point (12) of the transformer (2), and

   - loads (5) connected between the phase leg conductors (L1, L2, L3) and the neutral conductor (N), said loads being connected to the neutral conductor (N) at connection points (4),

   **characterized** in that

   - a bandstop filter (1) tuned at a center frequency 3*f is connected between the star point (12) of the transformer (2) and the connection points (4) of the loads (5).

6. A circuit as defined in claim 5, **characterized** in that the bandstop filter (1) tuned at a center frequency 3*f is connected between the earth potential connection point (3) of the neutral conductor (N) and the connection points (4) of the loads (5).

7. A circuit as defined in claim 5 or 6, **characterized** in that the bandstop filter (1) is formed by a parallel-resonant circuit.

8. A circuit as defined in claim 7, **characterized** in that the inductance (L) of said parallel-resonant circuit is formed by an inductor with a magnetic steel or ferrite core whose air gap is dimensioned so as to avoid saturation of the inductor magnetic circuit (8) at a neutral conductor a 50 Hz current of twice the nominal phase leg current when at the same time there is a third harmonic voltage (40 V) over the filter.

## Patentansprüche

1. Störungsunterdrückungsverfahren für eine elektrische Einrichtung, mit den Verfahrensschritten:

   Bereitstellen einer elektrischen Einrichtung, die einen Haupttransformator (2) mit einem Sternpunkt (12), Phasenschenkelleiter (L1, L2, L3), die an den Transformator (2) angeschlossen sind, und einen Nulleiter (N) aufweist, der mit seinem einen Ende (3) an Erdpotential (3) und an den Sternpunkt (12) des Transformators (2) und mit seinem anderen Ende (4) an Lastwiderstände (5) angeschlossen ist, wobei von der elektrischen Einrichtung elektrische Energie mit einer Frequenz f übertragen wird, das Verfahren **gekennzeichnet durch**
   Bereitstellen einer auf eine Mittenfrequenz 3*f abgestimmten Bandsperre (1), die zwischen den Sternpunkt (12) des Transformators (2) und die Anschlußstellen (4) der Lastwiderstände (5) geschaltet wird.

2. Verfahren nach Anspruch 1, dadurch gekennzeichnet, daß die auf eine Mittenfrequenz 3*f abgestimmte Bandsperre (1) zwischen die Erdpotential-Anschlußstelle (3) des Nulleiters (N) und die Anschlußstellen (4) der Lastwiderstände (5) geschaltet wird.

3. Verfahren nach Anspruch 1 oder 2, dadurch gekennzeichnet, daß die Bandsperre (1) von einem Parallelschwingkreis gebildet wird.

4. Verfahren nach Anspruch 3, dadurch gekennzeichnet, daß die Induktivität (L) des Parallelschwingkreises mittels einer Induktionsspule mit einem Kern aus magnetischem Stahl oder Ferrit gebildet wird, wobei der Luftspalt des Kerns derart dimensioniert wird, daß Sättigung des magnetischen Induktionsspulenschaltkreises (8) bei einem 50 Hz Nulleiterstrom von zweimal dem Phasenschenkel-Nennstrom vermieden wird, während gleichzeitig eine dritte harmonische Spannung (40 V) über der Sperre abfällt.

5. Schaltkreis für eine elektrische Einrichtung, wobei die elektrische Einrichtung, die elektrische Energie mit einer Frequenz f überträgt,

> einen Haupttransformator (2) mit einem Sternpunkt (12),
> Phasenschenkelleiter (L1, L2, L3), die mit dem Transformator (2) verbunden sind,
> einen Nulleiter (N), der mit Erdpotential (3) und dem Sternpunkt (12) des Transformators (2) verbunden ist, und
> Lastwiderstände (5) aufweist, die zwischen den Phasenschenkelleitern (L1, L2, L3) und dem Nulleiter (N) geschaltet sind, wobei die Lastwiderstände mit dem Nulleiter (N) an Anschlußstellen (4) verbunden sind, **dadurch gekennzeichnet,**
> daß eine auf eine Mittenfrequenz 3*f abgestimmte Bandsperre (1) zwischen dem Sternpunkt (12) des Transformators (2) und den Anschlußstellen (4) der Lastwiderstände (5) geschaltet ist.

6. Schaltkreis nach Anspruch 5, dadurch gekennzeichnet, daß die auf eine Mittenfrequenz 3*f abgestimmte Bandsperre (1) zwischen der Erdpotential-Anschlußstelle (3) des Nulleiters (N) und den Anschlußstellen (4) der Lastwiderstände (5) geschaltet ist.

7. Schaltkreis nach Anspruch 5 oder 6, dadurch gekennzeichnet, daß die Bandsperre von einem Parallelschwingkreis gebildet ist.

8. Schaltkreis nach Anspruch 7, dadurch gekennzeichnet, daß die Induktivität (L) des Parallelschwingkreises mittels einer Induktionsspule mit einem Kern aus magnetischem Stahl oder Ferrit gebildet ist, wobei der Luftspalt des Kerns derart dimensioniert ist, daß Sättigung des magnetischen Induktionsspulenschaltkreises (8) bei einem 50 Hz Nulleiterstrom von zweimal dem Phasenschenkel-Nennstrom vermieden wird, während gleichzeitig eine dritte harmonische Spannung (40 V) über der Sperre abfällt.

**Revendications**

1. Procédé d'élimination des parasites pour un système électrique, comprenant les étapes de présence d'un système électrique comprenant un transformateur principal (2) ayant un point étoile (12), des conducteurs de branche de phase (L1, L2, L3) reliés au transformateur (2) et un conducteur neutre (N) qui est relié, par une extrémité (3) au potentiel de la terre (3) et au point étoile (12) du transformateur (2) et, par son autre extrémité (4) à des charges (5), auxquelles est transférée, à une fréquence f, l'énergie électrique du système électrique, ledit procédé étant caractérisé par la présence

> - d'un filtre coupe-bande (1) accordé à une fréquence centrale 3*f et monté entre le point étoile (12) du transformateur (2) et les points de raccordement (4) des charges (5).

2. Procédé selon la revendication 1, caractérisé en ce que le filtre coupe-bande (1), accordé à une fréquence centrale 3*f, est monté entre le point de connexion du potentiel de terre (3) du conducteur neutre (N) et les points de raccordement (4) des charges (5).

3. Procédé selon la revendication 1 ou 2, caractérisé en ce que le filtre coupe-bande (1) est formé par un circuit résonnant parallèle.

4. Procédé selon la revendication 3, caractérisé en ce que l'inductance (L) dudit circuit résonnant parallèle est formée par une bobine d'inductance ayant un noyau en ferrite ou en acier à circuits magnétiques, dont l'entrefer est dimensionné de manière à éviter une saturation du circuit magnétique de bobine d'inductance (8) au niveau d'un conducteur neutre à un courant à 50 Hz, représentant deux fois le courant nominal de la branche de phase, lorsqu'il y a en même temps une tension de troisième harmonique (40 V) sur le filtre.

5. Circuit pour un système électrique, ledit système électrique, qui transmet de l'énergie électrique à une fréquence f, comprenant :

   - un transformateur principal (2) ayant un point étoile (12),
   - des conducteurs de branche de phase (L1, L2, L3) reliés au transformateur (2),
   - un conducteur neutre (N), relié au potentiel de la terre (3) et au point étoile (12) du transformateur (2), et
   - des charges (5), reliées entre les conducteurs de branche de phase (L1, L2, L3) et le conducteur neutre (N), lesdites charges étant reliées au conducteur neutre (N) en des points de raccordement (4),

   caractérisé en ce que

   - un filtre coupe-bande (1), accordé à une fréquence centrale 3*f, est monté entre le point étoile (12) du transformateur (2) et les points de raccordement (4) des charges (5).

6. Circuit selon la revendication 5, caractérisé en ce que le filtre coupe-bande (1), accordé à une fréquence centrale 3*f, est monté entre le point de connexion du potentiel de terre (3) du conducteur neutre (N) et les points de raccordement (4) des charges (5).

7. Circuit selon la revendication 5 ou 6, caractérisé en ce que le filtre coupe-bande (1) est formé par un circuit résonnant parallèle.

8. Circuit selon la revendication 7, caractérisé en ce que l'inductance (L) dudit circuit résonnant parallèle est formée par une bobine d'inductance ayant un noyau en ferrite ou en acier à circuits magnétiques, dont l'entrefer est dimensionné de manière à éviter une saturation du circuit magnétique de bobine d'inductance (8) au niveau d'un conducteur neutre à un courant à 50 Hz, représentant deux fois le courant nominal de la branche de phase, lorsqu'il y a en même temps une tension de troisième harmonique (40 V) sur le filtre.

Fig. 1

Fig. 2

Fig. 3

Fig. 4